Europäisches Patentamt

European Patent Office

Office européen des brevets

(19)

(11) Publication number: **0 453 260 A1**

(12) # EUROPEAN PATENT APPLICATION

(21) Application number: **91303419.5**

(22) Date of filing: **17.04.91**

(51) Int. Cl.⁵: **C04B 33/04**, C09C 3/06,
C09C 1/40, C09C 1/42,
C09C 1/02, C01B 33/22,
C01B 33/26

(30) Priority: **18.04.90 ZA 90897871**
**18.04.90 ZA 901463**

(43) Date of publication of application:
**23.10.91 Bulletin 91/43**

(84) Designated Contracting States:
**AT BE CH DE DK ES FR GB GR IT LI LU NL SE**

(71) Applicant: **MINEMET CC,**
**Chemical Engineering Building, University of**
**Natal, King George V Avenue**
**Durban, Natal Province (ZA)**

(72) Inventor: **Edwards, Roderick Ivan**
**12, Lesley Road**
**West Riding, Hillcrest, Natal Province (ZA)**
Inventor: **Coates, Anthony Charles**
**11, Greenacre Place**
**Kloof, Natal Province (ZA)**

(74) Representative: **Pidgeon, Robert John et al**
**Appleyard Lees & Co. 15 Clare Road**
**Halifax West Yorkshire HX1 2HY (GB)**

(54) The treatment of mineral surfaces.

(57)    A treatment method for chemically removing discolouring transition metal oxide contaminants from the surfaces of mineral particles to improve their brightness is provided. The method involves the contacting of the mineral particles with a solution of sulphur dioxide in water whilst simultaneously activating the sulphur dioxide to a reducing sulphur containing species to reduce transition metals and render them soluble. Dissolution of the reduced transition metals is effected by utilising excess sulphur dioxide or by employing a mineral acid such as sulphuric acid in solution.

EP 0 453 260 A1

Jouve, 18, rue Saint-Denis, 75001 PARIS

EP 0 453 260 A1

## FIELD OF THE INVENTION

This invention relates to the treatment of mineral surfaces, and more particularly, to the treatment of the surfaces of mineral particles in order to remove discolouring transition and other metal contaminants from the surfaces in order to improve the brightness of the mineral which may, for example, be kaolin clay, talc, silica, feldspar or other industrially used minerals.

Many naturally occurring minerals are used in industrial applications where the colour of the manufactured article containing the mineral is of importance. It is desirable that the colour of the mineral itself does not contribute to the colour of the final product and in some cases should not, in any event, contain transition metal ions in any appreciable concentration. Generally, the desired colour of such a mineral is white or colourless.

Examples of such minerals are kaolin clay used as a filler in the paper, plastics, rubber and paint industries and as an ingredient in the manufacture of ceramics; talc widely used in the cosmetics industry and as a filler in paints and plastics; muscovite mica used as a filler in paints and in the cosmetics industry; wollastonite used in the manufacture of ceramics and as a filler in paints; silica used as a filler in rubber and in the manufacture of ceramics and glass; and, feldspar used in the manufacture of ceramics and glass.

Naturally occurring minerals of this type are, in their natural form, often not suitable for such purposes as a result of discolouration by contaminant oxides, particularly those of transition metals such as iron and manganese.

These oxides may be embodied in the atomic lattice of the mineral itself in which case the mineral is often substantially useless as the contaminants cannot be practically removed.

However, in many instances, the contamination is substantially confined to the surface of the mineral in consequence of weathering processes over extremely long periods of time. In such cases it is possible to remove sufficient contaminant metal oxides to produce a useful product having the required degree of brightness, or absence of transition metal and other oxides. The practicality of such removal is dependent entirely on the nature and the degree of contamination.

The utility of any particular deposit of mineral is thus dependent on the degree of contamination. In some cases the mineral can be used without treatment and, in the past, it has been possible to remove, to an adequate extent, contamination which is fairly low.

Existing methods for removal of such contaminating oxides are of two types, namely, mechanical or chemical.

Mechanical methods can only be applied to hard, coarse grained minerals and are not entirely effective.

Chemical methods which have been used commercially are two-fold. The first is the direct treatment of the mineral with acid, such as hydrochloric acid. Such methods suffer from a lack of selectivity, high cost resulting from high acid concentrations and consumption and contamination of the product with acid which is difficult to remove completely.

The other chemical process employed has been reductive acid dissolution in which the transition metals are reduced to a lower valency state and then dissolved in dilute acid. Reagents that have been used are ascorbic acid, oxalic acid, formic acid, sodium dithionite and sodium formaldehyde sulphoxalate. Of these, only sodium dithionite (see for example British patent no. 1 585 122 to English Clays Lover) and its derivative formaldehyde sulphoxalate are commercially effective. These compounds achieve reduction of iron and manganese oxides to produce soluble compounds under mildly acidic conditions (pH = 2 - 4). They are therefore used widely as "bleaching" agents also in the paper and textile industries.

However, the use of dithionite has a number of disadvantages. Firstly, the compound is difficult and expensive to manufacture. Secondly, the quantities required are relatively high, for example, 1,5kgs of sodium dithionite are required per kilogram of iron to be dissolved. Accordingly, clays having 0,06% to 0,26% iron content have been commercially treated using dithionite but clays having a higher iron contamination, for example 1% to 2%, cannot be treated economically. Thirdly, dithionite is very reactive and undergoes many side reactions. The useful employment of dithionite is therefore low and this further increases, very substantially, the quantity required over the stoichiometric requirement.

It is, accordingly, the object of this invention to provide a method of treating minerals in particle form for the removal, from the surface region of the mineral particles, of discolouring contaminants in the form of transition metal and other oxides, which can be more economically achieved and, can thus be used to treat minerals having a higher degree of contamination than has been economically viable heretofore.

## SUMMARY OF THE INVENTION

In accordance with this invention there is provided a method of treating minerals in particle form for the removal, from the surface region of the mineral particles, of discolouring contaminants in the form of transition

2

metal oxides and which include at least an oxide of either iron or manganese, the method comprising the steps of:-

(i) contacting the mineral particles with water containing from 1 to 10 grams per litre sulphur dioxide ($SO_2$);

(ii) activating the sulphur dioxide to form reducing sulphur containing species in solution to reduce contaminant oxides at the surface of the mineral particles and thereby render them soluble;

(iii) causing dissolution of reduced contaminant metals, and,

(iv) separating the mineral particles from the dissolved contaminants.

Further features of the invention provide for the contacting of the mineral particles with the sulphur dioxide containing water to be effected by forming a slurry (generally where the mineral particles are of small size) or passing the sulphur dioxide containing water through a bed of the mineral particles (generally where the mineral particles are coarse); for the sulphur dioxide to be activated by contact thereof at a suitable temperature with a surface area of metal selected from iron, iron alloys, manganese, ferromanganese, zinc (conveniently in the form of galvanised iron) and aluminium (conveniently in the form of scrap aluminium for example turnings), preferably in the form of a bed of metal pieces through which the sulphur dioxide containing water is passed or metal plates suspended in the sulphur dioxide containing water; for the extent of said surface area to be selected to effect activation of the sulphur dioxide at a rate commensurate with the rate of reduction of metal oxide contaminants on the mineral particle surfaces; and for the reactivation of the sulphur dioxide to be effected or, enhanced, electrolytically using a cathode of a suitable metal such as aluminium or mild steel.

Still further features of the invention provide for the reduced contaminants to be dissolved either by the sulphurous acid formed by the presence of sulphur dioxide in water (in which case sufficient sulphur dioxide should be present for this purpope and at least in excess of stoichiometric requirement) or, for a mineral acid, for example, sulphuric acid to be added to the sulphur dioxide containing water to effect such dissolution; for the separation of treated mineral particles from the dissolved contaminants to be effected by physically separating the solids and liquid followed by washing of the mineral particles, or, alternatively, for the dissolved contaminants to be adsorbed onto an ion exchange resin to remove same and regenerate sulphur dioxide.

Still further, in cases where residual heavy metal contaminants remain after the treatment defined above, the mineral particles may be contacted with a dilute solution of chloric acid to remove such heavy metal contaminants.

The sulphur dioxide may be introduced into the water in any suitable manner and using any conventional gas-liquid contacting means. The temperature of the sulphur dioxide containing water may be as low as ambient temperature when certain metals such as iron, iron alloys or zinc are employed but, in order to achieve practical reaction rates where aluminium is used the temperature is elevated to between 40° and 70°C.

In cases where electrolytic activation of the sulphur dioxide is carried out, the cathode is preferably one of the metals mentioned above and the anode may be of graphite, lead, commercial precious metal coated titanium or the like.

In instances where a cation exchange resin is employed to remove the dissolved contaminant metals, this is preferably carried out by contacting a slurry directly with the cation exchange resin so that recontamination of the mineral particles is substantially eliminated. It is to be noted that in such instances $SO_2$ is regenerated in the slurry. The resin could, in such a case, be recovered by screening or other known means and subsequently regenerated using a strong mineral acid such as sulphuric acid. The $SO_2$ can be recycled.

In some cases, such as in the treatment of naturally occurring barytes, the product of the defined process results in a mineral which is nevertheless discoloured remnant compounds of heavy metals, such as those of copper or lead. These may be removed, as indicated, by contacting the mineral with a dilute solution of chloric acid (approximately 1,5g/l) which can conveniently be made by acidifying sodium chlorate with hydrochloric acid.

Whilst it is not entirely certain as to the nature of the sulphur containing reducing species that are produced by activation of the sulphur dioxide as provided by this invention, it is believed that the relevant species is the radical anion $SO_2^-$.

In any event it is desirable that the rate of production of the activated species of sulphur dioxide be controlled by controlling the total surface area of metal present, failing which the sulphur dioxide may be lost by decomposition into a multitude of by-products. It is therefore necessary to regulate the rate of production of the reducing sulphur containing species to a rate which is commensurate with the rate at which it is consumed by the metal contaminant on the mineral particle surfaces for reduction purposes. This may conveniently be achieved by carrying out the process of the invention in a plurality of co-current stages in each of which a different surface area of metal is employed. Where electrolysis is used as an aid, this can also be achieved by regulating the voltage applied between the electrodes.

It will be understood that, under controlled conditions, sulphur dioxide will be regenerated in the process defined and, accordingly, will not become an appreciably reactant cost.

In the case where aluminium is used in a purely chemical (non-electrolytic) process according to the invention, calculations indicate that only 1,6kg should be consumed per tonne of material treated where such material contains a 1% by weight iron contamination.

In order that the invention may be more fully understood, various tests which have been carried out, as well as proposed equipment for carrying out commercial processes, will now be described with reference to the accompanying drawings.

## BRIEF DESCRIPTION OF THE DRAWINGS

In the drawings:

FIG. 1 is a schematic flow diagram of a proposed process according to the invention; and,

FIG. 2 illustrates schematically contact equipment for use in carrying out the process.

## DETAILED DESCRIPTION WITH REFERENCE TO THE DRAWINGS

Initially various tests were carried out to confirm the operation of the invention. The tests will be described hereunder in the form of various examples.

### Example 1

A sample of kaolin derived from a weathered granite ore was prepared in the usual industrial method by slurrying the ore in water, removing coarse silica particles by screening, and separating out other impurities by passing the slurry through a hydro-cyclone with a cut point of 10 microns. The clay so produced had a pinkish-beige colour. Chemical analysis showed that the material had an iron content of 0,96 mass%.

Samples of this particulate mineral were subjected to comparative treatments using five different processes as indicated in the following table. In methods 2 and 3 the reactions were taken to completion whilst in methods 4 and 5 the reaction was carried out for a period of two hours as stated. The temperatures at which the reaction was carried out are set out in the Table.

### TABLE

| Method | Al dissolved g/1000g Clay | Fe dissolved g/1000g Clay | Residual Fe g/1000g Clay | Colour |
|---|---|---|---|---|
| 1. No treatment | – | – | 9,6 | pink |
| 2. 6M HCl/100° C | 9,4 | 7,0 | 2,6 | white |
| 3. 2MHCl + ascorbic acid / 100° C | 3,1 | 5,6 | 4,0 | white |
| 4. 2g/l SO$_2$ + 4g/l H$_2$SO$_4$ 60° C | 0,4 | 0,3 | 9,3 | pink |
| 5. 6g/l SO$_2$ 60° C | 0,2 | 0,2 | 9,4 | pink |

The results show that it is necessary to remove in excess of 60% of the iron in order to produce a satisfactorily white clay.

It is to be noted that sulphur dioxide, both alone and in combination with sulphuric acid will not effect "bleaching" in the absence of activation of the sulphur dioxide as required by the invention.

Two 300g dry samples of kaolin were then subject to treatment according to this invention.

In the case of one sample, sample A, 5g/l SO$_2$ gas was added to the slurry which was heated to 60°C and circulated through a bed of scrap aluminium turnings for 90 minutes. The slurry was filtered and the solution analysed for iron and aluminium whilst the dried clay was analysed for iron.

In the other case, sample B, 2g/l $SO_2$ and 4g/l $H_2SO_4$ were added to the slurry and the same procedure followed as that for sample A. The results obtained were as follows:-

| Sample | Al dissolved g/1000g | Fe dissolved g/1000g | Fe residual g/1000g | Colour |
|---|---|---|---|---|
| A | 3,1 | 6,4 | 3,2 | White |
| B | 3,5 | 5,9 | 3,7 | White |

It will be noted that in both cases a satisfactory colour was achieved. The nett aluminium consumption was, in the case of sample A, 2,9g/kg and in the case of sample B, 3,1g/kg. Thus the amount of metallic aluminium consumed was found to be 0,45kg aluminium per kilogram iron dissolved and 0,52Kg aluminium per kilogam iron dissolved in the cases of samples A and B respectively. This amounts to three times the stoichiometric requirement but still compares very favourably with the amount of sodium dithionite which would be required ie. a minimum of 1,6kg sodium dithionate per kilogram of iron dissolved.

Example 2

A feldspar concentrate was prepared from weathered granite by a process involving screening, crushing to a size of less than 600 microns, attritioning and magnetic separation. The product was slightly brown in colour and was analysed to have an iron content of 0,1% by mass. This is generally considered too high for many applications.

2kg of this material was placed in a container to form a bed therein and a solution containing 4g/l $SO_2$ was circulated through the bed and through a column containing scrap aluminium. The temperature of the solution was maintained at 60°C. After two hours the bed of feldspar had turned white and the process was stopped. The solution was drained, the feldspar washed with water, dried, and a sample analysed for iron. The iron content had been reduced to 0.02% by mass which is satisfactory for most industrial purposes.

Example 3

In a series of tests, mild steel sheets of known surface area were used to bleach an iron stained clay containing 0,6 mass % iron. A slurry containing 10% by mass of the clay and 5g/l $SO_2$ in water were circulated through a metal bed having a known surface area at 25°C. The results are set out below.

| Metal area ($cm^2$/litre) | Time to bleach (minutes) | Total iron dissolved grams/100g day | Iron usage g/g Fe dissolved |
|---|---|---|---|
| 600 | 16 | 2,4 | 3,0 |
| 300 | 15 | 1,6 | 1,67 |
| 150 | 17 | 1,2 | 1,0 |
| 75 | 23 | 1,0 | 0,67 |

These results show clearly that the provision of a large surface area does not significantly increase the rate of "bleaching" but significantly increases the amount of iron metal dissolved from the mild steel sheets. These results back up the proposal to use a multi-stage co-current process in which each stage has its optimum metal surface area for the activation of the sulphur dioxide.

## Example 4

In this example the efficacy of utilising an ion exchange resin to remove dissolved iron was tested. The resin employed was a commercial strong cation exchange resin sold under the trade name "DUOLITE C26TR" and manufactured by National Chemical Products (Proprietary) Limited under licence from Rohm & Haas.

In a first test a sample of finely ground bauxite containing 4,5 mass % iron as oxide was "bleached" using mild steel as the metal. In this test the pH was allowed to rise without correction but it was found that within fifteen minutes the pH had risen to greater than 4,5 at which stage "bleaching" effectively ceased.

In a second test the pH was kept constant at 2,5 by adding small amounts of cation exchange resin beads at regular intervals to the slurry. Under these conditions bleaching proceeded steadily and within two hours effectively all of the iron oxide had been removed from the mineral. At this stage approximately 85% of the total dissolved iron had been adsorbed onto the resin beads which were screened off and a further amount of fresh resin added to adsorb practically all of the iron remaining in solution.

This satisfactorily demonstrated that the dissolved transition metal can be effectively adsorbed during bleaching by direct contact with the slurry.

Various other minerals were tested for amenability to the "bleaching" process of this invention. These included kaolin clays having an iron content of 0,5 to 2%; fine silica with an iron content of 0,5 to 0,1 mass %; calcined kaolin having an iron content of 0,5 to 0,1 mass %; fine andalucite having an iron content of 1,0 to 0,5%; feldspar having an iron content of 0, 10%; barytes having an iron content of 2,5%; and bauxite having an iron content of 4, 50%. All these minerals responded to the bleaching process although the rate of bleaching varied considerably.

In the case of barytes which was originally of a pink colour, it was found that the mineral had an unsatisfactory discolouration. This was found to be due to the presence of remnant compounds of heavy metals such as copper or lead. These heavy metals were subsequently removed by retreating the mineral with a dilute solution of chloric acid (1,5g/l) which was made by acidifying sodium chlorate with hydrochloric acid. After thirty minutes of contact the grey colouration had disappeared. The brightness of the barytes was improved from less than 80 to 86,5 in the first stage (the treatment according to this invention) and the subsequent treatment with chloric acid improved the brightness to 90,0 which is substantially brighter than natural barytes and is close to the brightness of artificial barium sulphate (blanc fixe).

Tests were also conducted in which activation of the sulphur dioxide was assisted using electrolysis by utilising the metal surface as a cathode with the anode being chosen from graphite, lead, commercial precious metal coated titanium or the like. In this case the process operated effectively and the rate of activation of sulphur dioxide could be controlled by varying the voltage applied across the electrodes.

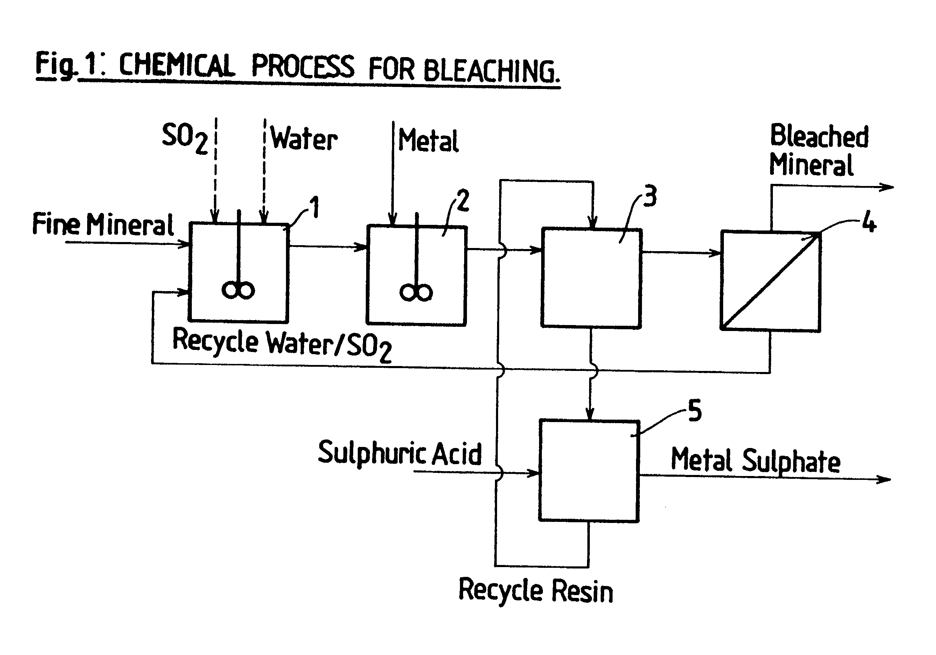

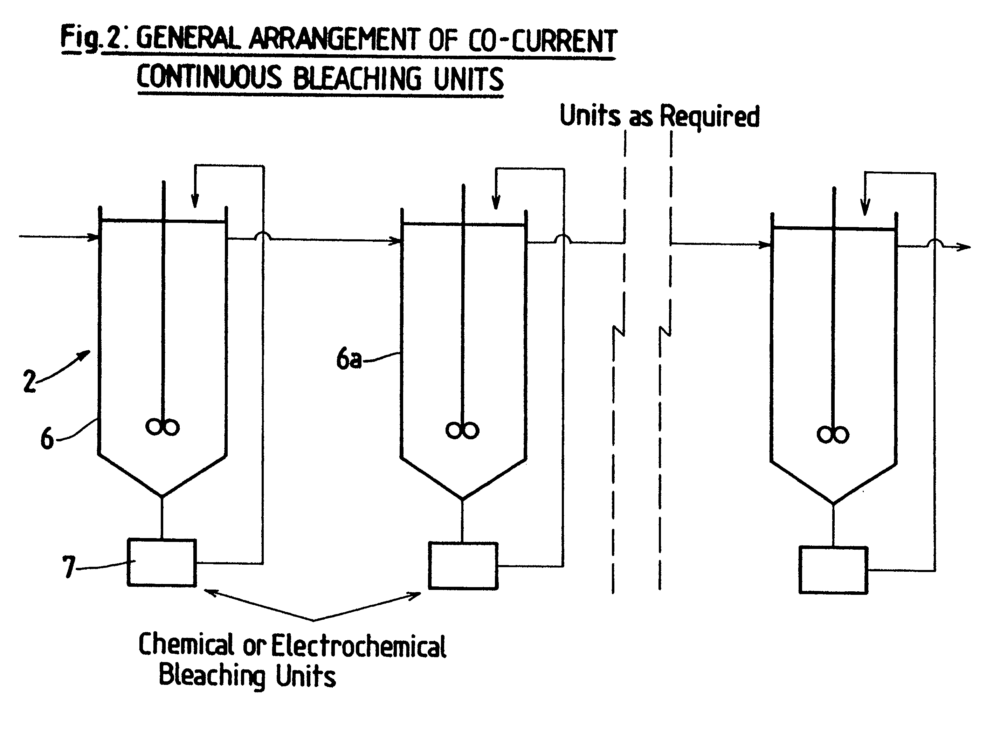

Based on the tests carried out, a flow diagram which is illustrated in Fig. 1 is proposed. This flow diagram illustrates a mixer 1 in which a slurry of a mineral together with water and the required sulphur dioxide is prepared. This slurry is then passed to a bleaching unit 2 in which it is contacted, generally by cycling the material through the required metal generally in the form of a bed and the proposed equipment for which is more clearly illustrated in Fig. 2. After reaction the slurry is passed through an ion exchanger 3 and thereafter the liquids and solids are separated in a separator 4 with the liquid being recycled to the mixer together with its regenerated sulphur dioxide. The "bleached" mineral is recovered from the separator.

The resin from the ion exchanger is removed periodically and regenerated with sulphuric acid in a suitable vessel 5.

Referring now to Fig. 2, there is illustrated a series of bleaching units 2 each comprising a stirred tank 6 from the bottom of which slurry is passed through a metal bed 7 and returned to the top of the tank on a continuous basis. Overflow slurry is passed to a subsequent tank 6a in which the surface area of the metal is different, or electrolytic activation of sulphur dioxide is carried out at a different rate, and commensurate with the rate at which discolouring contaminants are being reduced at the surface of the mineral particles in the respective tank. The number of tanks and bleaching units required will depend on the circumstances.

The invention therefore provides an inexpensive and effective method for treating mineral particles to remove discolouring transition metal contaminants from the surfaces thereof in order to improve their colour as indicated above.

## Claims

1. A method of treating minerals in particle form for the removal, from the surface region of the mineral particles, of discolouring contaminants in the form of transition metal oxides and which include at least an oxide of either iron or manganese, the method comprising the steps of:-

   (i) contacting the mineral particles with water containing from 1 to 10 grams per litre sulphur dioxide ($SO_2$) and optionally heated to from 40 to 70°C;

   (ii) activating the sulphur dioxide to form reducing sulphur containing species in solution to reduce contaminant oxides and thereby render them soluble;

   (iii) causing dissolution of reduced contaminant metals; and,

   (iv) separating the mineral particles from the dissolved contaminants.

2. A method as claimed in claim 1 in which the sulphur dioxide is activated by contacting the sulphur dioxide containing water, at a suitable temperature, with a surface area of metal selected from iron, iron alloys, manganese, ferromanganese, zinc and aluminium.

3. A method as claimed in claim 2 in which the extent of said surface area is selected to effect activation of the sulphur dioxide at a rate commensurate with the rate of reduction of metal oxide contaminants on the mineral particles.

4. A method as claimed in claim 3 in which the process is carried out in a plurality of co-current stages in each of which a different surface area of metal is employed to activate the sulphur dioxide.

5. A method as claimed in any one of the preceding claims in which the sulphur dioxide is activated, or activation thereof is supplemented, electrolytically and the rate of such activation is controlled by adjusting the voltage across a cathode made of iron, iron alloys or aluminium and a co-operating anode.

6. A method as claimed in any one of the preceding claims in which dissolution of reduced oxide contaminants is effected by sulphur dioxide in solution in which case such sulphur dioxide is present in at least the stiochiometric quantity required to effect such dissolution in addition to that required to effect reduction.

7. A method as claimed in any one of claims 1 to 5 in which dissolution of reduced oxide contaminants is effected by a mineral acid added to the sulphur dioxide containing water in at least the stoichiometric quantity required to effect such dissolution.

8. A method as claimed in any one of the preceding claims in which separation of the mineral particles is effected by physically separating out the solution of dissolved contaminants and subsequently working the mineral particles.

9. A method as claimed in any one of claims 1 to 7 in which separation of the dissolved contaminants is effected by contacting the solution thereof, optionally in the presence of the mineral particles, with an ion exchange resin to remove such contaminants and regenerate sulphur dioxide.

10. A method as claimed in any one of the preceding claims in which residual heavy metal contaminants are removed from the treated mineral particles by contacting same with a dilute solution of chloric acid.

# Fig. 1: CHEMICAL PROCESS FOR BLEACHING.

# Fig.2: GENERAL ARRANGEMENT OF CO-CURRENT CONTINUOUS BLEACHING UNITS

Units as Required

6a

2

6

7

Chemical or Electrochemical
Bleaching Units

EP 0 453 260 A1

**European Patent Office**

# EUROPEAN SEARCH REPORT

Application Number

EP 91 30 3419
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2095447 (ENGELHARD MINERALS & CHEMICALS CO.) <br> * page 1, lines 3 - 6; claim 1 * <br> * page 12, line 16 - page 13, line 22 * <br> --- | 1-3, 6-8 | C04B33/04 <br> C09C3/06 <br> C09C1/40 <br> C09C1/42 <br> C09C1/02 <br> C01B33/22 <br> C01B33/26 |
| X | World Patents Index Database <br> Accession No. 71-15955S, Week 09 <br> Derwent Publications Ltd, London GB <br> & JP-A-46007563 (Agency of Industrial Scie) <br> without publication date <br> * whole Abstract * <br> --- | 1, 7 | |
| X | World Patents Index (Latest) (Database) <br> Accession No. 89-173128, Week 24 <br> Derwent Publications Ltd, London GB <br> & BR-A-8705550 (Seoane R. F.) 09.05.1989 <br> * Whole Abstract * <br> --- | 1, 2, 7 | |
| X | World Patents Index (Latest) <br> Accession No. 89-173127, Week 24 <br> Derwent Publications Ltd, London GB <br> & BR-A-8705549 (Seoane R. F.) 09.05.1989 <br> * Whole Abstract * <br> --- | 1, 2 | **TECHNICAL FIELDS SEARCHED (Int. Cl.5)** |
| X | World Patents Index (Latest) <br> Accession No. 88-354230, Week 50 <br> Derwent Publications Ltd, London GB <br> & BR-A-8702120 (Ind. Minas Ltda) 08.11.1988 <br> * Whole Abstract * <br> --- | 1, 2, 7 | C04B <br> C09C <br> C01B |
| X | World Patents Index (Latest) <br> Accession No. 88-354231, Week 50 <br> Derwent Publications Ltd, London GB <br> & BR-A-8702121 (Ind. Minas Ltda) 08.11.1988 <br> * Whole Abstract * <br> --- <br> -/-- | 1, 2, 7 | |

The present search report has been drawn up for all claims

| Place of search | Date of completion of the search | Examiner |
|---|---|---|
| THE HAGUE | 23 JULY 1991 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P0401)

**European Patent Office**

# EUROPEAN SEARCH REPORT

Application Number

EP  91 30 3419
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DD-A-122370 (H. SINNECKER ET AL.)<br>* page 2, left-hand column, lines 1 - 11; claim 1 *<br>* page 2, left-hand column, lines 25 - 33 *<br>* page 2, right-hand column, lines 10 - 18 *<br>---- | 1-3, 5, 7 | |
| X | DE-C-570015 (ZAKLADY ELEKTRO SPOLKA)<br>* claim 1 *<br>---- | 1 | |
| X | US-A-2149506 (A. H. BUMP)<br>* claim 1 *<br>----- | 1, 2 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 23 JULY 1991 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)